# EUROPEAN PATENT APPLICATION

(11) **EP 4 079 801 A1**
(43) Date of publication of application: **26.10.2022**
(21) Application number: 20900878.8
(22) Date of filing: 16.12.2020
(51) Int. Cl.: C08K 5/19, C08K 7/14, C08L 67/02, C09K 3/00, C08L 63/00

(54) **POLYBUTYLENE TEREPHTHALATE RESIN COMPOSITION, MOLDED ARTICLE, THICKENING INHIBITOR FOR POLYBUTYLENE TEREPHTHALATE RESIN COMPOSITIONS, AND HYDROLYSIS INHIBITOR FOR MOLDED ARTICLES FORMED FROM POLYBUTYLENE TEREPHTHALATE RESIN COMPOSITIONS**

(30) Priority: 17.12.2019 JP 2019227033
(71) Applicant: Polyplastics Co., Ltd., Tokyo 108-8280 (JP)
(72) Inventor: SAITO, Itsuki, Fuji-shi, Shizuoka 416-8533 (JP); GOSHIMA, Kazuya, Fuji-shi, Shizuoka 416-8533 (JP)
(74) Representative: Winter, Brandl - Partnerschaft mbB
(86) International application number: PCT/JP2020/046881
(87) International publication number: WO 2021/125203

(57) **Abstract**

[Problem] The present invention addresses a problem of providing: a polybutylene terephthalate resin composition that has an excellent effect of enhancing hydrolysis resistance; a molded article; a thickening inhibitor for a polybutylene terephthalate resin composition; and a hydrolysis inhibitor for a molded article comprising a polybutylene terephthalate resin composition.

[Solution] The problem described above is solved by: a polybutylene terephthalate resin composition containing, with respect to 100 parts by mass of a polybutylene terephthalate resin (A) having a carboxylic acid terminal group of 35 meq/kg or less, 0.5 parts by mass or more and 10 parts by mass or less of an epoxy-based resin (B), and a quaternary ammonium salt (C); a molded article comprising the polybutylene terephthalate resin composition; a thickening inhibitor for a polybutylene terephthalate resin composition, the thickening inhibitor containing a quaternary ammonium salt; and a hydrolysis inhibitor for a molded article comprising a polybutylene terephthalate resin composition, the hydrolysis inhibitor containing a quaternary ammonium salt.

## Description

### TECHNICAL FIELD

The present invention relates to a polybutylene terephthalate resin composition, a molded article, a thickening inhibitor for a polybutylene terephthalate resin composition, and a hydrolysis inhibitor for a molded article comprising a polybutylene terephthalate resin composition.

### BACKGROUND

Polybutylene terephthalate (hereinafter also referred to as "PBT") resin is excellent in various properties such as thermal resistance, chemical resistance, electrical properties, mechanical properties, and moldability, and is therefore applied to many uses.

Examples of specific uses include various kinds of electrical components for automobiles (various kinds of control units, various kinds of sensors, and ignition coils, etc.), connectors, switch components, relay components, and coil components.

Further, polybutylene terephthalate resin is a polyester resin and enhancing hydrolysis resistance is essential for improving durability. For this reason, enhancements by using additives such as epoxy-based resins and carbodiimide have conventionally been practiced.

Although carbodiimide has an extremely good effect of enhancing hydrolysis resistance, there is a problem of toxic isocyanates being produced. In the case of epoxy-based resins, effects of enhancing hydrolysis resistance are insufficient, and there are cases wherein carboxylic acid terminals of PBT react with epoxy groups and viscosity increases.

Note that combining a ring-opening catalyst with an epoxy-based resin is conventionally well-known (Patent Document 1). However, the only substance which actually demonstrates an effect as a ring-opening catalyst in said document is calcium stearate.

Further, Patent Document 2 discloses many examples of ring-opening catalysts. Although there is a disclosure of tetrabutylammonium bromide, etc., as a quaternary ammonium salt, it is indicated that sodium stearate is particularly preferable, and an actual evaluation of a quaternary ammonium salt is not performed.

### CITATION LIST

### PATENT LITERATURE

Patent Document 1: JP H11-236492 A
Patent Document 2: JP H8-157701 A

### SUMMARY OF INVENTION

### TECHNICAL PROBLEM

The present invention addresses a problem of providing: a polybutylene terephthalate resin composition that has an excellent effect of enhancing hydrolysis resistance; a molded article; a thickening inhibitor for a polybutylene terephthalate resin composition; and a hydrolysis inhibitor for a molded article comprising a polybutylene terephthalate resin composition.

### SOLUTION TO PROBLEM

The present inventors discovered that it is possible to solve the problem described above by: a polybutylene terephthalate resin composition containing, with respect to 100 parts by mass of a polybutylene terephthalate resin (A) having a carboxylic acid terminal group of 35 meq/kg or less, 0.5 parts by mass or more and 10 parts by mass or less of an epoxy-based resin (B), and a quaternary ammonium salt (C); a molded article comprising the polybutylene terephthalate resin composition described above; a thickening inhibitor for a polybutylene terephthalate resin composition, the thickening inhibitor containing a quaternary ammonium salt; and a hydrolysis inhibitor for a molded article comprising a polybutylene terephthalate resin composition, the hydrolysis inhibitor containing a quaternary ammonium salt. This discovery led to the completion of the present invention.

That is, the present invention relates to (1)-(10) below.
(1) A polybutylene terephthalate resin composition containing, with respect to 100 parts by mass of a polybutylene terephthalate resin (A) having a carboxylic acid terminal group of 35 meq/kg or less, 0.5 parts by mass or more and 10 parts by mass or less of an epoxy-based resin (B), and a quaternary ammonium salt (C).
(2) The polybutylene terephthalate resin composition described in (1), wherein the content of the quaternary ammonium salt (C) is 0.1 parts by mass or more and 3.0 parts by mass or less with respect to 100 parts by mass of the polybutylene terephthalate resin (A).
(3) The polybutylene terephthalate resin composition described in (1) or (2), wherein the quaternary ammonium salt (C) is represented by the following chemical formula, wherein: R₁₋₄ are C₁₋₅ alkyl groups or zero or more one or less of R₁₋₄ is an aryl group or an aralkyl group; and the quaternary ammonium salt (C) has an anion X⁻ that is a bromide ion. 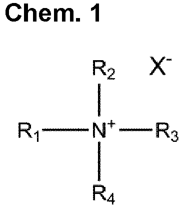
(4) The polybutylene terephthalate resin composition described in any one of (1)-(3) further containing a filler.
(5) The polybutylene terephthalate resin composition described in (4), wherein the filler is glass fibers.
(6) A molded article comprising the polybutylene terephthalate resin composition described in any one of (1)-(5).
(7) A thickening inhibitor for a polybutylene terephthalate resin composition containing a polybutylene terephthalate resin and an epoxy-based resin, the thickening inhibitor containing a quaternary ammonium salt.
(8) The thickening inhibitor described in (7), wherein the quaternary ammonium salt is the quaternary ammonium salt (C) indicated in (3), wherein: R₁₋₄ are C₁₋₅ alkyl groups or zero or more one or more of R₁₋₄ is an aryl group or an aralkyl group; and the quaternary ammonium salt (C) has an anion X⁻ that is a bromide ion.
(9) A hydrolysis inhibitor for a molded article comprising a polybutylene terephthalate resin composition containing a polybutylene terephthalate resin and an epoxy-based resin, the hydrolysis inhibitor containing a quaternary ammonium salt.
(10) The hydrolysis inhibitor described in (9), wherein the quaternary ammonium salt is the quaternary ammonium salt (C) indicated in (3), wherein: R₁₋₄ are C₁₋₅ alkyl groups or zero or more one or more of R₁₋₄ is an aryl group or an aralkyl group; and the quaternary ammonium salt (C) has an anion X⁻ that is a bromide ion.

### EFFECTS OF INVENTION

According to the present invention, it is possible to provide: a polybutylene terephthalate resin composition that has an excellent effect of enhancing hydrolysis resistance; a molded article; a thickening inhibitor for a polybutylene terephthalate resin composition; and a hydrolysis inhibitor for a molded article comprising a polybutylene terephthalate resin composition.

### DESCRIPTION OF EMBODIMENTS

Hereinafter, an embodiment of the present invention shall be described in detail. The present invention is not limited to the following embodiment and can be implemented with changes added, as appropriate, as long as the effects of the invention are not inhibited. Further, in the present description, the expression "X-Y" means "X or more and Y or less'.

### Polybutylene terephthalate resin composition

### Polybutylene terephthalate resin

Polybutylene terephthalate resins (PBT resins) are obtained by condensation polymerizing a dicarboxylic acid component comprising at least terephthalic acid or an ester-forming derivative thereof (a C₁₋₆ alkylester, an acid halide, etc.) and at least of a glycol component comprising an alkylene glycol with a carbon number 4 (1,4-butanediol) or an ester-forming derivative thereof (an acetylate, etc.). In the present embodiment, the polybutylene terephthalate resin is not limited to homopolybutylene terephthalate resins and may be a copolymer containing 60 mol% or more of butylene terephthalate units.

The terminal carboxyl group amount of the polybutylene terephthalate resin is 35 meq/kg or less but is not particularly limited thereto as long as the objective of the present invention is not hindered, and is preferably 30 meq/kg or less and more preferably 25 meq/kg or less.

The intrinsic viscosity (IV) of the polybutylene terephthalate resin is not particularly limited as long as the objective of the present application is not hindered, and is preferably 0.60 dL/g or more and 1.2 dL/g or less, and more preferably 0.65 dL/g or more and 0.9 dL/g or less. When a polybutylene terephthalate resin with an intrinsic viscosity in such a range is used, the obtained polybutylene terephthalate resin composition has particularly excellent moldability. Further, the intrinsic viscosity can be adjusted by blending polybutylene terephthalate resins having different intrinsic viscosities. For example, by blending a polybutylene terephthalate resin having an intrinsic viscosity of 1.0 dL/g with a polybutylene terephthalate resin having an intrinsic viscosity of 0.7 dL/g, a polybutylene terephthalate resin having an intrinsic viscosity of 0.9 dL/g can be prepared. The intrinsic viscosity of the polybutylene terephthalate resin can be measured under conditions of, for example, a temperature of 35°C in o-chlorophenol.

In preparing the polybutylene terephthalate resin, when using an aromatic dicarboxylic acid other than terephthalic acid or an ester-forming derivative thereof as a comonomer component, for example, a C₈₋₁₄ aromatic dicarboxylic acid such as isophthalic acid, phthalic acid, 2,6-naphthalenedicarboxylic acid, or 4,4'-dicarboxydiphenylether; a C₄₋₁₆ alkanedicarboxylic acid such as succinic acid, adipic acid, azelaic acid, or sebacic acid; a C₅₋₁₀ cycloalkanedicarboxylic acid such as cyclohexanedicarboxylic acid; or an ester-forming derivative of these dicarboxylic acid components (a C₁₋₆ alkylester derivative, an acid halide, etc.) can be used. These dicarboxylic acid components may be used alone or in a combination of two or more.

Among these dicarboxylic acid components, a C₈₋₁₂ aromatic dicarboxylic acid such as isophthalic acid and a C₆₋₁₂ alkanedicarboxylic acid such as adipic acid, azelaic acid, or sebacic acid are more preferred.

In preparing the polybutylene terephthalate resin, when using a glycol component other than 1,4-butanediol as a comonomer component, for example, a C₂₋₁₀ alkylene glycol such as ethylene glycol, propylene glycol, trimethylene glycol, 1,3-butylene glycol, hexamethylene glycol, neopentyl glycol, or 1,3-octanediol; a polyoxyalkylene glycol such as diethylene glycol, triethylene glycol, or dipropylene glycol; an alicyclic diol such as cyclohexanedimethanol or hydrogenated bisphenol A; an aromatic diol such as bisphenol A or 4,4'-dihydroxybiphenyl; a C₂₋₄ alkylene oxide adduct of bisphenol A such as an ethylene oxide 2-mol adduct of bisphenol A or a propylene oxide 3-mol adduct of bisphenol A; or an ester-forming derivative of these glycols (an acetylate, etc.) can be used. These glycol components may be used alone or in a combination of two or more.

Among these glycol components, a C₂₋₆ alkylene glycol such as ethylene glycol or trimethylene glycol, a polyoxyalkylene glycol such as diethylene glycol, an alicyclic diol such as cyclohexanedimethanol, etc. is more preferred.

As comonomer components that can be used beyond the dicarboxylic acid component and the glycol component, there are, for example, aromatic hydroxycarboxylic acids such as 4-hydroxybenzoic acid, 3-hydroxybenzoic acid, 6-hydroxy-2-naphthoic acid, and 4-carboxy-4'-hydroxybiphenyl; aliphatic hydroxycarboxylic acids such as glycolic acid and hydroxycaproic acid; C₃₋₁₂ lactones such as propiolactones, butyrolactones, valerolactones, and caprolactones (ε-caprolactone, etc.); and ester-forming derivatives of these comonomer components (C₁₋₆ alkylester derivatives, acid halides, acetylates, etc.).

The content of the polybutylene terephthalate resin is preferably 20-90 mass% of the total mass of the resin composition, more preferably 30-80 mass%, and still more preferably 40-70 mass%.

### Epoxy-based resin

Examples of epoxy-based compounds constituting the epoxy-based resin of the present invention include aromatic epoxy compounds such as biphenyl-type epoxy compounds, bisphenol A-type epoxy compounds, phenol novolak-type epoxy compounds, and cresol novolak-type epoxy compounds. Two or more epoxy compounds may be used in any arbitrary combination. The epoxy equivalent weight is preferably 150-1500 g/equivalent (g/eq).

The content of the epoxy-based resin in the polybutylene terephthalate resin composition of the present invention is 0.5 parts by mass or more and 10 parts by mass or less with respect to 100 parts by mass of the polybutylene terephthalate resin, but is preferably 0.5 parts by mass or more and 8 parts by mass or less, more preferably 0.5 parts by mass or more and 6 parts by mass or less, still more preferably 0.5 parts by mass or more and 5 parts by mass or less, and particularly preferably 0.5 parts by mass or more and 4 parts by mass or less.

### Quaternary ammonium salt

The quaternary ammonium cation constituting the quaternary ammonium salt contained in the polybutylene terephthalate resin composition of the present invention is a polyatomic ion which has a positive charge and is represented by a molecular formula NR₄⁺. The four Rs are each a C₁₋₁₆ alkyl group, aryl group, aralkyl group, or a combination thereof.

The number of carbon atoms of each of the four Rs is preferably 1-10, more preferably 1-8, still more preferably 1-7, particularly preferably 2-4, and most preferably 4 (butyl). The four Rs may have a number of carbon atoms that differs from one another. Further, the total number of carbon atoms of the four Rs is preferably 30 or less, more preferably 26 or less, still more preferably 22 or less, particularly preferably 18 or less, and most preferably 16 or less.

The anion X⁻ constituting the quaternary ammonium salt contained in the polybutylene terephthalate resin composition of the present invention has a monovalent negative charge. That anion is preferably a halide ion, more preferably an ion selected from the group consisting of a chloride ion, a bromide ion, and an iodide ion, still more preferably an ion selected from the group consisting of a chloride ion and a bromide ion, and particularly preferably a bromide ion.

Further, the quaternary ammonium salt according to the present invention may be represented by the following chemical formula.

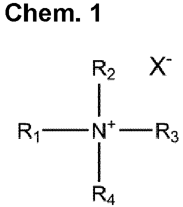

In the chemical formula above, it is preferable that R₁₋₄ are C₁₋₅ alkyl groups or zero or more one or less of R₁₋₄ is an aryl group or an aralkyl group. Further, the anion X⁻is preferably a bromide ion. Note that "zero or more one or less of R₁₋₄ is an aryl group or an aralkyl group" means that R₁₋₄ may include an alkyl group that is not an aryl group or an aralkyl group.

Examples of a quaternary ammonium salt which is particularly preferably contained in the polybutylene terephthalate resin composition of the present invention include tetrabutylammonium bromide, tetraethylammonium bromide, benzyltrimethylammonium bromide, and benzyltriethylammonium bromide.

The content of the quaternary ammonium salt contained in the polybutylene terephthalate resin composition of the present invention is, with respect to 100 parts by mass of the polybutylene terephthalate resin (A), preferably 0.1 parts by mass or more and 3.0 parts by mass or less, more preferably 0.15 parts by mass or more and 2.0 parts by mass or less, and still more preferably 0.2 parts by mass or more and 1.0 parts by mass or less.

### Thickening inhibitor for polybutylene terephthalate resin composition

Further, by using, as the quaternary ammonium salt, a quaternary ammonium cation represented by NR₄⁺ wherein, among the four Rs, three Rs are methyl groups and the other R is a functional group that has a number of carbon atoms of six or more and is selected from an alkyl group, an aryl group, and an aralkyl group, it is possible to obtain a thickening inhibitor for a polybutylene terephthalate resin composition containing a polybutylene terephthalate resin and an epoxy-based resin. Examples of a quaternary ammonium salt which is preferably used as the thickening inhibitor of the present invention include benzyltrimethylammonium bromide and dodecyltrimethylammonium bromide.

### Hydrolysis inhibitor for molded article comprising polybutylene terephthalate resin composition

Furthermore, by using, as the quaternary ammonium salt, a quaternary ammonium cation represented by NR₄⁺ wherein the four Rs are each a C₁₋₁₅ alkyl group, a C₁₋₁₅ aryl group, a C₁₋₁₅ aralkyl group, or a combination thereof, it is possible to obtain a hydrolysis inhibitor for a molded article comprising a polybutylene terephthalate resin composition containing a polybutylene terephthalate resin and an epoxy-based resin.

### Filler

A filler may be used, as necessary, in the polybutylene terephthalate resin composition of the present invention. Such a filler is preferably blended in order to obtain excellent properties in performance such as mechanical strength, thermal resistance, dimensional stability, and electrical properties and is particularly effective with the objective of increasing rigidity. In accordance with the objective, a fibrous, granular, or tabular filler is used.

Examples of fibrous fillers include glass fibers, silica fibers, silica/alumina fibers, zirconia fibers, boron nitride fibers, silicon nitride fibers, and boron fibers, etc. Highmelting point organic fibrous substances such as polyamides, fluorine resins, and acrylic resins can also be used.

Examples of granular fillers include quartz powder, glass beads, glass powder, silicates (excluding talc) such as calcium silicate, aluminum silicate, kaolin, clay, diatomaceous earth, and wollastonite, etc., silicon carbide, silicon nitride, and boron nitride, etc.

Further, examples of tabular inorganic fillers include mica and glass flakes, etc.

The type of the filler is not particularly limited and one or more types of filler can be added. In particular, using glass fibers or glass flakes is preferred.

The amount of the filler added is not particularly specified but is preferably 200 parts by mass or less with respect to 100 parts by mass of the polybutylene terephthalate resin composition. When the filler is added excessively, inferior moldability and decreases in toughness are observed.

### Other components

In a range that does not hinder the effects of the present invention, in order to impart desired properties in accordance with the objective thereof, the polybutylene terephthalate resin composition according to an embodiment of the present invention may have blended therein publicly-known substances that are generally added to thermoplastic resins and thermosetting resins, including, for example, stabilizers such as antioxidants and ultraviolet absorbers, etc., antistatic agents, impact modifiers such as elastomers, etc., colorants such as dyes and pigments, etc., mold release agents, lubricants, crystallization promoters, and crystal nucleating agents, etc.

### Molded Article

A molded article according to an embodiment of the present invention is formed by molding the polybutylene terephthalate resin composition of the present invention. The molding method is not particularly limited and a publicly-known molding method may be employed. For example, production may be performed by: (1) a method involving mixing the components, kneading and extruding with a single-screw or twinscrew extruder to prepare pellets, and then molding; (2) a method involving firstly preparing pellets (masterbatch) having different compositions, mixing (diluting) the pellets at predetermined amounts, and subjecting to molding to obtain a molded article having a prescribed composition; or (3) a method involving directly loading one or more of the components into a molder. The pellets may be prepared, for example, by melt-mixing components other than brittle components (glass-based reinforcing material, etc.) and thereafter mixing in the brittle components. Further, the method for molding other molded articles comprising a thermoplastic resin is not particularly limited and a publicly-known molding method may be employed.

The molded product may be produced by melt-kneading the resin composition and molding using a conventional method such as extrusion molding, injection molding, compression molding, blow molding, vacuum molding, rotation molding, and gas injection molding, etc., but is normally molded by injection molding. The mold temperature at the time of injection molding is normally approximately 40-90°C, preferably approximately 50-80°C, and more preferably approximately 60-80°C.

The molded article may include a colorant. Examples of the colorant include inorganic pigments {black pigments such as carbon black [for example, acetylene black, lamp black, thermal black, furnace black, channel black, and ketjen black, etc.], red pigments such as iron oxide red, etc., orange pigments such as molybdate orange, etc., and white pigments such as titanium oxide, etc.}, and organic pigments (yellow pigments, orange pigments, red pigments, blue pigments, and green pigments, etc.). The average particle diameter of the carbon black is normally approximately 10-1000 nm, and preferably, may be approximately 10-100 nm. The ratio of the colorant with respect to the entire molded article is approximately 0.1-10 weight% and preferably approximately 0.3-5 weight% (for example, 0.3-3 weight%).

### Examples

The present invention will be explained in detail below by using the following examples, but the present invention is not limited by these examples so long as the gist thereof is not exceeded.

### Materials

The materials used in the examples are as shown in Tables 1-3.

### (A) Polybutylene terephthalate resin (PBT)

- (A-1) PBT: polybutylene terephthalate resin, manufactured by Polyplastics Co., Ltd., terminal carboxyl group amount 12 meq/kg, intrinsic viscosity 0.87 dl/g
- (A-2) PBT: polybutylene terephthalate resin, manufactured by Polyplastics Co., Ltd., terminal carboxyl group amount 23 meq/kg, intrinsic viscosity 0.69 dl/g

### (B) Epoxy-based resin

- Epoxy resin: Epikote JER1004K, manufactured by Mitsubishi Chemical Corporation

### (C) Quaternary ammonium salt

- (C-1) Tetrabutylammonium bromide
- (C-2) Tetraethylammonium bromide
- (C-3) Tetrapropylammonium bromide
- (C-4) Tetrapentylammonium bromide
- (C-5) Tetrahexylammonium bromide
- (C-6) Tetraheptylammonium bromide
- (C-7) Tetraoctylammonium bromide
- (C-8) Tetrabutylammonium chloride
- (C-9) Tetrabutylammonium iodide
- (C-10) Tetrabutylammonium tetraphenylborate
- (C-11) Benzyltrimethylammonium bromide
- (C-12) Benzyltriethylammonium bromide
- (C-13) Benzyltriethylammonium chloride
- (C-14) Dodecyltrimethylammonium bromide
- (C-15) Phenyltrimethylammonium chloride
- (C-16) Cetyldimethylethylammonium bromide
- (C-17) Stearyltrimethylammonium bromide
- (C'-1) Phenylboronic acid
- (C'-2) Calcium stearate
- (C'-3) Bis(2,2,6,6-tetramethyl-4-piperidyl) sebacate

### Filler

- Glass fibers: EC SO3T-127, manufactured by Nippon Electric Glass Co., Ltd. Other components
- Antioxidant: Irganox 1010, manufactured by BASF Japan, Ltd.
- Lubricant: Rikemal B74, diglycerin fatty acid ester, manufactured by Riken Vitamin Co., Ltd.

### Evaluation Method

### Examples 1-20 and Comparative Examples 1-12

The components were mixed at the proportions shown in Tables 1-3 and thereafter melt-kneaded and extruded using TEX-30 manufactured by The Japan Steel Works, Ltd., at a cylinder temperature of 260°C, a discharge rate of 15 kg/h, and a screw rotation speed of 130 rpm to obtain pellets comprising a polybutylene terephthalate resin composition, and the following properties were evaluated.

### Melt viscosity

The obtained pellets were dried at 140°C for three hours and thereafter a capilograph manufactured by Toyoseiki Seisaku-sho, Ltd. was used, employing a flat die with a 1 mm ø × 20 mmL capillary, to measure melt viscosity (Pa·s) at a barrel temperature of 260°C, a residence time of nine minutes, and a shear rate of 1000 sec⁻¹. The results are shown in Tables 1-3.

### Hydrolysis resistance

The obtained pellets were dried at 140°C for three hours, then injection-molded at a cylinder temperature of 260°C and a mold temperature of 80°C to produce type 1A tensile test pieces compliant with ISO 3167, and the tensile strength of the obtained test pieces was measured in compliance with ISO 527-1 and 2.

Next, other test pieces produced in the same manner were processed in a pressure cooker test (121°C × 100 %Rh × 203 kPa × 75 hr, 100 hr, 120 hr), thereafter the tensile strength thereof was measured in compliance with ISO 527-1 and 2, and respective strength retention rates (%) were calculated from ratios relative to the tensile strength of unprocessed pieces. The results are shown in Tables 1-3.

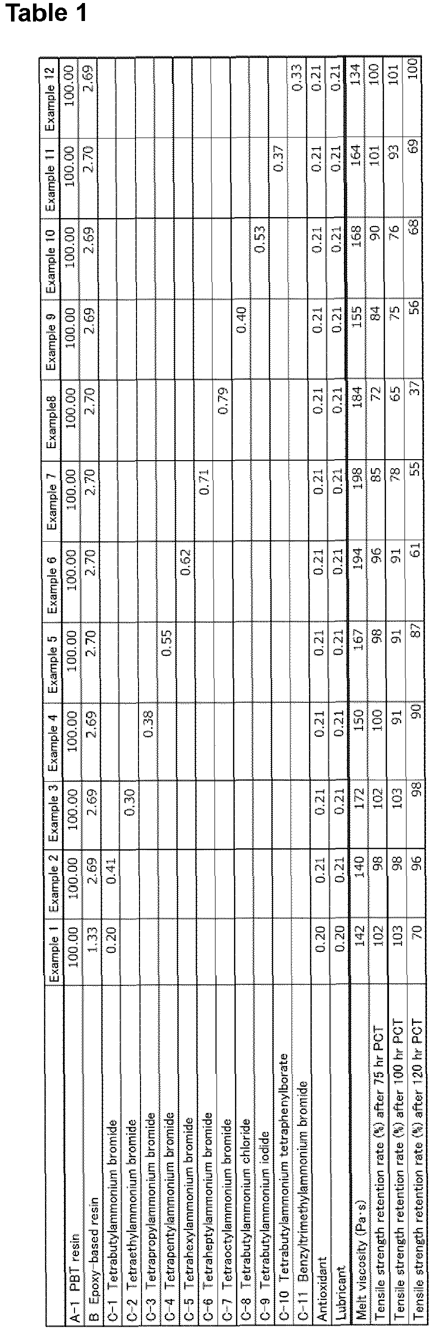

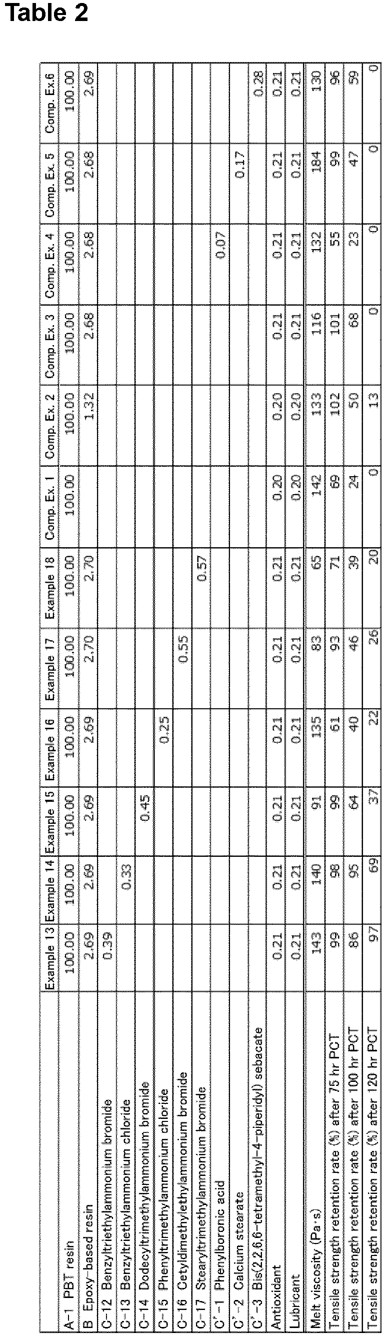

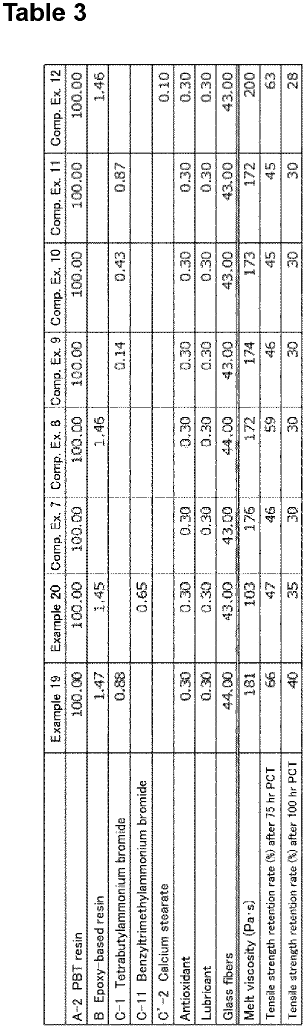

As shown in Tables 1-3, in the examples, a high tensile strength retention rate was shown even after the PCT treatment. From a comparison with the comparative examples, in particular, it was confirmed in the examples that remarkable superiority can be observed after PCT processing of 100 hr or 120 hr. This shows that the quaternary ammonium salt specified in the present invention improves the hydrolysis properties of a molded article comprising a polybutylene terephthalate resin composition containing a polybutylene terephthalate resin and an epoxy-based resin.

## Claims

1. A polybutylene terephthalate resin composition containing, with respect to 100 parts by mass of a polybutylene terephthalate resin (A) having a carboxylic acid terminal group of 35 meq/kg or less, 0.5 parts by mass or more and 10 parts by mass or less of an epoxy-based resin (B), and a quaternary ammonium salt (C).

2. The polybutylene terephthalate resin composition according to claim 1, wherein the content of the quaternary ammonium salt (C) is 0.1 parts by mass or more and 3.0 parts by mass or less with respect to 100 parts by mass of the polybutylene terephthalate resin (A).

3. The polybutylene terephthalate resin composition according to claim 1 or 2, wherein the quaternary ammonium salt (C) is represented by the following chemical formula, wherein: R₁₋₄ are C₁₋₅ alkyl groups or zero or more one or less of R₁₋₄ is an aryl group or an aralkyl group; and the quaternary ammonium salt (C) has an anion X⁻ that is a bromide ion.

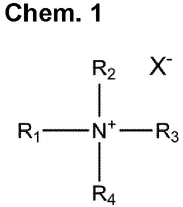

4. The polybutylene terephthalate resin composition according to any one of claims 1-3, further containing a filler.

5. The polybutylene terephthalate resin composition according to claim 4, wherein the filler is glass fibers.

6. A molded article comprising the polybutylene terephthalate resin composition according to any one of claims 1-5.

7. A thickening inhibitor for a polybutylene terephthalate resin composition containing a polybutylene terephthalate resin and an epoxy-based resin, the thickening inhibitor containing a quaternary ammonium salt.

8. The thickening inhibitor according to claim 7, wherein the quaternary ammonium salt is the quaternary ammonium salt (C) indicated in claim 3, wherein: R₁₋₄ are C₁₋₅ alkyl groups or zero or more one or less of R₁₋₄ is an aryl group or an aralkyl group; and the quaternary ammonium salt (C) has an anion X⁻ that is a bromide ion.

9. A hydrolysis inhibitor for a molded article comprising a polybutylene terephthalate resin composition containing a polybutylene terephthalate resin and an epoxy-based resin, the hydrolysis inhibitor containing a quaternary ammonium salt.

10. The hydrolysis inhibitor according to claim 9, wherein the quaternary ammonium salt is the quaternary ammonium salt (C) indicated in claim 3, wherein: R₁₋₄ are C₁₋₅ alkyl groups or zero or more one or less of R₁₋₄ is an aryl group or an aralkyl group; and the quaternary ammonium salt (C) has an anion X⁻ that is a bromide ion.
